(19) Europäisches Patentamt
European Patent Office
Office européen des brevets

(11)  EP 4 427 972 A1

(12)  **EUROPEAN PATENT APPLICATION**

(43) Date of publication:
**11.09.2024  Bulletin 2024/37**

(21) Application number: **23160846.4**

(22) Date of filing: **09.03.2023**

(51) International Patent Classification (IPC):
**B60L 53/64** (2019.01)    **G06N 3/126** (2023.01)

(52) Cooperative Patent Classification (CPC):
**B60L 58/16; B60L 53/62; B60L 53/64; B60L 58/12;
G06N 3/126;** B60L 2240/80; B60L 2260/46

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **TOYOTA JIDOSHA KABUSHIKI
KAISHA
Aichi-Ken 471-8571 (JP)**

(72) Inventors:
• **SYMEONIDIS, Nikos
1140 BRUSSELS (BE)**

• **NAGANO, Shota
1140 BRUSSELS (BE)**
• **VAN LIERDE, Samuel
1140 BRUSSELS (BE)**

(74) Representative: **Cabinet Beau de Loménie
158, rue de l'Université
75340 Paris Cedex 07 (FR)**

Remarks:
Amended claims in accordance with Rule 137(2)
EPC.

(54)  **BATTERY CHARGING CONTROL AI OPTIMIZATION**

(57)    A computer-implemented method for optimization of charging a battery of a vehicle, the method comprising applying a genetic algorithm, wherein:
the genetic algorithm takes, as an input, a charge period (T) available for charging the battery of the vehicle, and the genetic algorithm outputs at least one charge profile over the charge period.

EP 4 427 972 A1

**FIG. 3**

**Description**

BACKGROUND OF THE INVENTION

1. Field of the Invention

The invention relates to a computer-implemented method for optimization of charging a battery of a vehicle.

2. Description of Related Art

With a growing number of electric vehicles and plug-in hybrid electric vehicles, the associated load on the electrical grid increases.

Methods of charging batteries of electric vehicles usually involve charging at a substantially constant current intensity.

Charging of a fleet of electric vehicles has peaks and off-peaks, for example corresponding to the charging in the evening after commuting back from work, and these peaks further the strain on the electrical grid.

Methods for determining the charge profile based on constraints such as charging cost are known, for example based on reinforcement learning.

However, a need exists for more efficient and adaptable methods.

SUMMARY OF THE INVENTION

A first aspect of the present invention is a computer-implemented method for optimization of charging a battery of a vehicle, the method comprising applying a genetic algorithm, wherein:

the genetic algorithm takes, as an input, a charge period available for charging the battery of the vehicle, and
the genetic algorithm outputs at least one charge profile over the charge period.

The nature and the value of inputs may be preset, determined according to preset routines, input by a user prior to charging a vehicle, or defined by any other means that the skilled person would consider.

By "charge profile" (or simply "profile") is understood the time evolution over a given time period of an electrical parameter. For example, charge profile is the time evolution of an electrical parameter such as charge current, charge voltage or charge power.

For the sake of simplicity and without loss of generality, the electrical parameter will be defined below as the charge current, e.g. the intensity of current supplied to the battery for charging the battery.

By "charge period" is understood a period for charging the vehicle, starting at a charge start time and ending at a charge end time. The "charge period" as an input also encompasses a charge duration, as the charge period can be immediately and effortlessly derived from the charge duration by assuming the present time as the charge start time by default.

Such an optimization method makes it possible to perform efficient charging of the battery of the vehicle, the method being adaptable and compatible with multiple inputs.

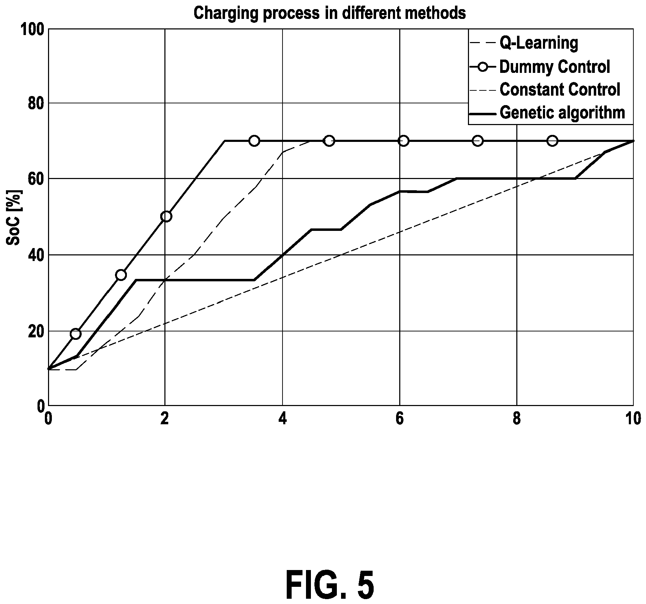

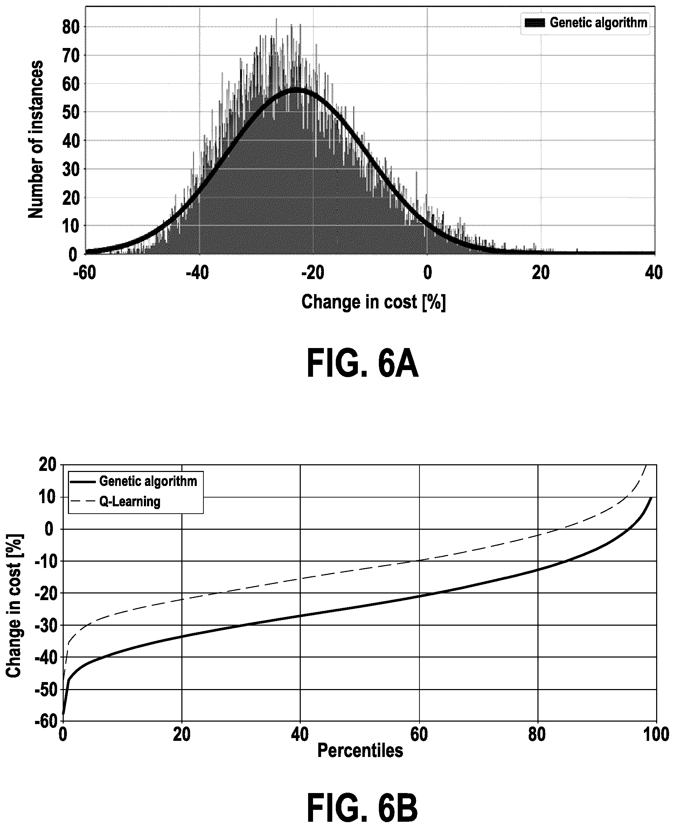

Such a method allows efficient battery charging, and is suitable for taking into account of further inputs. In particular, this method provides with more optimal charge profiles than methods based on "constant charging", "dummy charging" (further discussed below with respect to Figs. 5 and 6A to 6D).

This method is especially useful when the available time for charging is more than the minimum time for charging the vehicle. For example, a typical scenario is the owner of an electrical vehicle wishing to charge their vehicle overnight, when duration of the charge period is significantly greater than the minimum charge time for charging the battery to a given state of charge at maximum charge current.

This method is also more optimal than reinforcement learning algorithms. This method is also more robust, e.g. this method better approaches an optimal solution when taking into account of multiple inputs than reinforcement learning algorithms.

In some embodiments, the genetic algorithm takes, as an input, a target state of charge (SOC) of the battery.

This makes it possible to suitably charge the battery to or at least close to a desired state of charge.

In some embodiments, the genetic algorithm takes, as an input, an electricity cost profile, optionally wherein the electricity cost profile includes a predicted electricity cost profile.

By "electricity cost profile" is understood the cost over time (and in the present case, over the charge period) of the electricity provided from the source of electricity.

This allows suitable charging of a vehicle with a reduced cost for a user. For example, in the case of charging a vehicle over a sufficiently long time, charge current is suitably allocated over the charge period so as to approach or reach the desired battery state of charge while reducing the charging cost.

As the price of electricity is often correlated with the load on the electrical grid, reducing the charging cost for the user is strongly linked with reducing load on the electrical grid. For these reasons, in the present application, the mentions of reduced charging cost for the user and of reduced load on the electrical grid are interchangeable.

Predicted electricity cost profile may for example be based on electricity price models, based on the cost profiles of previous days, or any other electricity cost prediction method available to the skilled person.

Such an electricity cost profile makes it possible to provide an electricity cost profile as an input that is closer to the real electricity cost profile, and thus to output a charge profile more suitable for reducing load on the electrical grid.

In some embodiments, the genetic algorithm takes, as an input, at least one of battery specifications, a battery durability and a battery charging efficiency.

By "battery specifications" is understood at least one battery parameter related to electrical and/or electronic properties of the battery, comprising but not limited to battery capacity, or maximum battery voltage.

By "battery durability" is understood at least one electrical parameter that affects the state and/or the lifespan of the battery, comprising but not limited to battery temperature (current or maximum), maximum charge current, average charging power over a predetermined amount of time, or battery overcharging.

By "battery charging efficiency" is understood at least one electrical parameter that affects the charging speed of the battery, comprising but not limited to minimum charge current, air temperature at the charging location.

Such charge constraints make it possible to protect the integrity and the state of the battery.

In some embodiments, the genetic algorithm comprises the steps of: defining at least one initial charge profile;

evaluating a fitness score for the at least one initial charge profile based on a fitness function, wherein the fitness function is based on at least one charge constraint, the at least one charge constraint being optionally based on the at least one input;

selecting at least one parent charge profile from the at least one initial charge profile based on their respective fitness score;

generating at least one child charge profile by applying at least one genetic operator to the at least one parent charge profile; and

iterating the steps of evaluating, selecting and generating, with the at least one initial charge profile including the at least one child charge profile, until a stop condition is met; the method further comprising outputting, when the stop condition is met, at least one of the remaining child charge profiles having the best fitness score.

By "charge constraint" is understood a constraint of the operation of charging the battery of the vehicle, comprising but not limited to constraints related to the battery, the electric source, the user or the external environment.

By "genetic operator" is understood an operator of a genetic algorithm.

By "selecting" is understood the operation of selecting profiles to keep in the current work population, the other profiles being discarded, wherein the current work population is the set of profiles to which an iteration of the genetic algorithm is being applied.

By "stop condition" is understood a predetermined condition for breaking out of the iteration loop.

Such a genetic algorithm is especially well-suited for providing efficient battery charging taking into account the charge constraints.

In case two or more charge profiles have the best fitness score, the output charge profile may for example be chosen randomly, or as the one having the best performance with respect to one of the charge constraints .

The remaining child charge profiles may include one or more charge profiles of the directly preceding iteration loop. In particular, the remaining child charge profile may include one or more of the best charge profiles of the directly preceding iteration loop.

This makes it possible to ensure that the fitness score does not decrease between each iteration, e.g. that the best solution is kept. It is understood that "best performance" is an objective assessment of performance of charging from the standpoint of the fitness score.

Unless stated otherwise, the evaluation of "good", "bad", "best", "worst", "better" or "worse" charge profiles is based on the fitness score of the charge profiles. Evaluation of the fitness score of a charge profiles is performed prior to any operation requiring assessment of the performance of a profile, and may not be explicitly mentioned below to improve readability.

The remaining child charge profiles may also include one or more other child profiles to maintain genetic diversity of the remaining child charge profiles.

A first population of charge profiles is considered more "genetically diverse" than a second population of charge profiles if the relative distance between the charge profiles of the first population is higher than the relative distance between the charge profiles of the second population. For example, the relative distance between the charge profiles of a population may be defined as the average relative distance between every pair of charge profiles of said population.

The relative distance between two charge profiles may for example be evaluated using a norm, comprising but not limited to the Euclidean norm.

Maintaining genetic diversity of the remaining child charge profiles prevents the algorithm from converging to a local optimum.

In some embodiments, the steps of evaluating, selecting and generating may be performed again in a new iteration with the at least one initial charge profile of the new iteration including the at least one child charge profile of the iteration directly preceding said new iteration. The at least one initial charge profile of said new iteration may also include the at least one parent charge profile of said directly preceding iteration.

In some embodiments, the step of selecting may be carried out before or after the step of applying the at least one genetic operator.

In some embodiments, the fitness function is a polynomial function of the at least one charge constraint.

"Polynomial function" also encompasses piecewise polynomial functions, preferably continuous.

In an example, the fitness function is a linear combination of polynomial functions that each depend on only one charge constraint. In other words, the second order mixed partial derivatives of the fitness function with respect to each of the charge constraint are equal to zero.

Optimization based on a genetic algorithm is well-suited for tuning and taking into account of further constraints, which can be included into the fitness function. In particular, optimization wherein the fitness function is a polynomial function is especially adapted for tuning, for example by adapting the coefficients of the polynomial function or including an additional constraints, without starting over again the whole optimization algorithm.

In some embodiments, the stop condition includes reaching a threshold for at least one of a fitness score, a number of iteration, a rate of improvement of the fitness score between two iterations, computing time or memory load.

By "rate of improvement of the fitness score" is understood the absolute or relative rate of improvement of the fitness score of the charge profile with the best score between successive generations.

In some embodiments, the method comprises generating the at least one initial charge profile randomly.

By "random initial charge profile" is understood an initial charge profile comprising taking random values throughout the charge period. The random values may be limited to values within technical and safety limits, for example limited by maximum instantaneous charge current.

Randomizing initial charge profiles makes it possible to select a genetically diverse starting population of charge profiles and to increase chances of converging to a global optimum.

In some embodiments, the at least one genetic operator includes mutation and/or crossover.

By mutation is understood the genetic operator of mutation, involving each profile individually.

Mutation corresponds to the operation of modifying one or more element of one or more profile. For example, the modification may involve assigning a random value to the one or more element of the one or more profile.

Mutation makes it possible to introduce genetic diversity into the population of charge profiles, thereby preventing the algorithm from converging towards a local optimum.

By crossover is understood the genetic operator of crossover, involving pairs of profiles.

In particular, crossover is the operation of forming one or two children vectors from two parent vectors by swapping elements between the parent vectors.

In some embodiments, the step of crossover involves one-point crossover.

One-point crossover is an operation of crossover wherein all the elements after a random position are swapped between the two parent vectors.

In some embodiments, the at least one genetic operator includes two-point crossover, or higher order multiple-point crossovers.

Multiple-point crossover is equivalent to multiple one-point crossover being successively applied, thereby creating alternating regions from each of the parent vectors.

In some embodiments, the step of selection comprises selecting a predetermined number of profiles and/or selection is based on steady state selection.

Steady state selection involves replacing underperforming profiles with better performing children, generated from parents among the best performing profiles of the previous generation.

Steady state selection makes it possible to perform generation of children and selection in parallel, thereby increasing computation speed and reducing memory load.

Other selection methods may be used, comprising but not limited to stochastic universal sampling or rank selection.

Stochastic universal sampling involves ranking profiles by fitness score, and selecting profiles by sampling at evenly spaced intervals among the ranked profiles.

Stochastic universal sampling makes it possible to reduce the number of profiles, while keeping some poor solutions (having bad fitness score) which may have some chances of producing children approaching a global optimum.

Similarly to the mutation step, keeping such poor solutions makes it possible keep profiles that may "branch out" and converge towards a different local optimum, increasing the chances of converging towards a global optimum.

In some embodiments, the at least one genetic operator includes mutation and crossover, the method further comprising a second step of selecting at least one parent charge profile between mutation and crossover.

The method may then involve, in that order, steps of crossover, second selection and mutation, or in that order, steps of mutation, second selection and crossover.

A second aspect of the present invention is a method of charging a battery of a vehicle using the method of the first aspect, comprising applying the output charge profile to the battery of the vehicle.

The battery of the vehicle can then be efficiently charged, from the standpoint of the charge constraints.

Some embodiments comprise, during the charge of the battery of the vehicle:

modifying the fitness function and/or the at least one input of the genetic algorithm;
running a new instance of the genetic algorithm based on the modified fitness function and/or the at least one modified input of the genetic algorithm; and
continuing the charge of the battery of the vehicle based on the output child charge profile of said new instance having the best fitness score.

Modifying an input of the genetic algorithm includes updating said input, for example based on a more recently measured or estimated value.

Such modifications make it possible to more efficiently charge the battery by better approaching the actual charge constraints of the battery.

As an alternative or in supplement, the step of modifying may further include modifying the fitness function, and the step of running again the genetic algorithm may be based on the modified fitness function and/or the at least one modified input.

A third aspect of the present invention is a computer-readable program comprising instructions which, when the program is executed by at least one processor, cause said at least one processor to implement the method of the first aspect or of the second aspect.

A fourth aspect of the present invention is a computer-readable storage medium having stored thereon the computer program of the third aspect.

BRIEF DESCRIPTION OF THE DRAWINGS

Features, advantages, and technical and industrial significance of exemplary embodiments of the invention will be described below with reference to the accompanying drawings, in which like signs denote like elements, and wherein:

Figure 1 is a schematic view showing a vehicle, electric load, a server, and the communication therebetween.
Figure 2 is a general diagram of a genetic algorithm in accordance with an embodiment.
Figure 3 is a general diagram of a method of charging a battery in accordance with an embodiment, including a method for optimization of charging a battery of a vehicle in accordance an embodiment.
Figure 4 is a graph illustrating an example of the evolution of a fitness score for successive generations (iterations) upon running an example of the method.
Figure 5 is a graph showing an example of a method of charging a battery as compared with other methods based on dummy control, constant control and reinforcement learning.
Figures 6A and 6B are graphs summarizing relative performances of the genetic algorithm in accordance with an embodiment and of reinforcement learning methods, as compared with dummy control.
Figures 6C and 6D are graphs summarizing relative performances of the genetic algorithm in accordance with an embodiment and of reinforcement learning methods, as compared with constant control.

DETAILED DESCRIPTION OF EMBODIMENTS

Reference will now be made in detail to a method constituting an exemplar embodiment of the present disclosure. The exemplar embodiment may be modified while remaining within the scope as defined by the claims. The description and the drawings must be understood as illustrative rather than restrictive.

The present disclosure relates to a method aimed to charging a battery 10 of a vehicle V

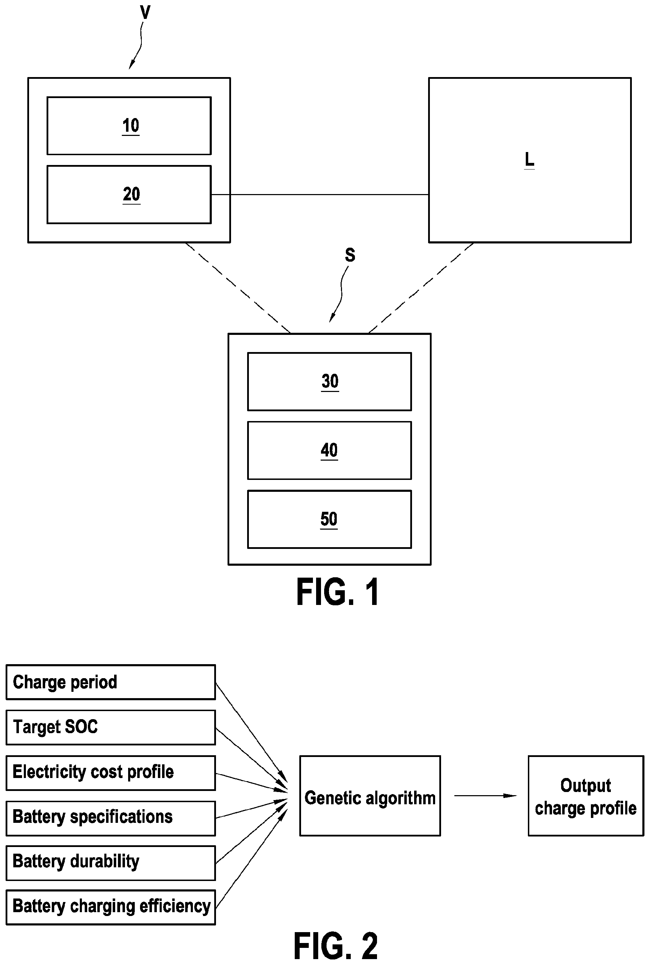

As displayed in Figure 1, a vehicle V may comprise a battery 10 and electric connection means 20.

The vehicle V may for example be an electric vehicle or a plug-in hybrid vehicle, or any vehicle having a battery embedded therein.

The vehicle V comprises electric connection means 20 receiving electric current for charging the battery 10 via a source of electricity or load L, as indicated by the full line in Figure 1. The load L may for example be a charge station connected to electrical grid.

A server S may be provided, comprising at least one processor 40 and a memory 30.

The memory 30 stores thereon a program for implementing the method as developed below, and the processor 40 is suitable for implementing said program.

The server S may comprise communication means 50, capable of communicating with the vehicle and/or the source of electricity, as identified by the dashed line. The communication means 50 may also be suitable for receiving instructions, for example from the smartphone of a user or any suitable input device, or may be suitable for requesting and receiving data required for running the method, comprising but not limited to past cost profiles or data from battery sensors.

The server S may be provided in the vehicle V, in the load L, or may be provided outside the vehicle V and the load L.

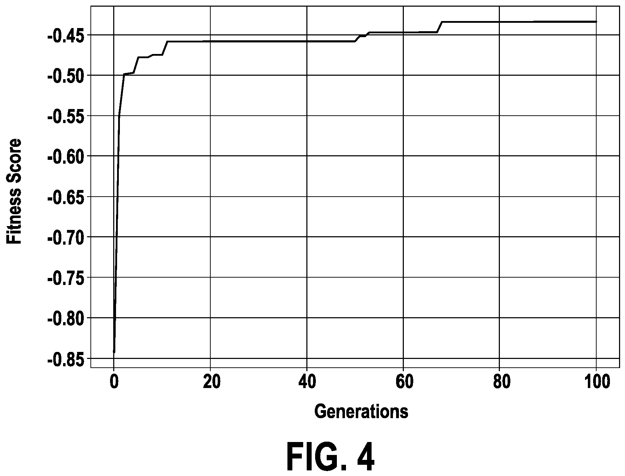

The method for optimizing of charging the battery 20 of the vehicle V according to an embodiment will be described with reference to figures 2, 3 and 4.

All the below quantities that are time-dependent are defined over the considered charge period of duration T between a start time t0 and an end time t0+T.

For the sake of facilitated understanding and without loss of generality, below quantities are discrete, and will be defined as vectors having the same number of elements identically sampled over the charge period, when applicable. The sampling rate may be chosen by the skilled person based on considerations such as computation efficiency and available memory, as well as accuracy of the evaluation and control of charging of the vehicle.

Naturally, this does not rule out that some quantities may instead be continuous.

In particular, all the quantities are defined as vectors having N elements, with sample rate equal to

$$\frac{1}{\Delta t} = \frac{N}{T} \qquad (1)$$

with $\Delta t$ being the sample period.

In particular, the method will be described in a scenario where the available charge time, e.g. the charge period T, is greater than the minimum charge time for charging the battery from empty to full capacity at maximum charge current ("dummy charging"). Indeed, this allows a greater deviation from dummy charging and constant charging, and therefore provides more room for optimization of charge.

Naturally, the present method is also applicable when the charge period T is smaller than the minimum charge time, with the main difference that a greater compromise will have to be made on the target SOC s* which may otherwise not be achieved.

In an example of a typical charging scenario, a user intends to use their car for their daily commute to work, leaving their car to charge overnight during 12 hours, so that their car can be used to commute the following morning. Depending on the battery 10 and the charge source of load L, the minimum charge time is of around four to six hours.

In this scenario, it is not necessary for the battery 10 to be fully charged overnight, and it may instead be advantageous to charge the battery according to a charge profile taking account of constraints defined there below.

Reference will be made below to "dummy charging" and "constant charging", examples of which are shown in Figure 5.

"Dummy charging" is charging of the battery at the maximum charge current Imax that can be safely supplied to the battery 10 by load L.

"Dummy charging" is thus a two-step charging, where the battery starts with a current of intensity Imax, and no more current is supplied once the target SOC s* has been reached.

An example of "Dummy charging" is shown with a solid line with circles in Figure 5, for charging to a target SOC s* of 70%.

"Constant charging" is charging of the battery at a mean charge current Imean, which is calculated as the mean charge current that needs to be supplied during the charge period T to charge the battery from the starting SOC s0 to the target SOC s*. Imean is expressed as follows:

$$Imean = \frac{C.(s^{*}-s0)}{T} \qquad (2)$$

where C is the capacity of the battery 10.

An example of "Constant charging" is shown with a short dashed line in Figure 5, for charging to a target SOC s* of 70%.

As shown in Fig. 2, the method for optimization of charging a battery comprises a genetic algorithm which may take, as an input, at least one of the following: charge period, target SOC s*, starting SOC s0, electricity cost profile, battery specifications, battery durability and battery charging efficiency.

The genetic algorithm may also take, as an input, a relative importance of the at least one corresponding charge constraint.

The genetic algorithm outputs one or more output charge profiles. The output charge profile defines how to charge the battery during the charge period.

A fitness function F may be defined. The fitness function F makes it possible to evaluate a fitness score for each charge profile, and thereby to rank profiles from "best", having the highest fitness score, to "worst", having the lowest fitness score. Naturally, the fitness function F may be designed such that "best" profiles are profiles having the lowest fitness score, and "worst" profiles are profiles having lowest fitness score.

The fitness function F is defined according to charge constraints. The charge constraints may include the inputs of the genetic algorithm as defined above. The charge constraints may also include additional quantities that are not input to the genetic algorithm. For example, the charge constraints may include quantities that are estimated based on the inputs, comprising but not limited to the predicted electricity cost profile based on past electricity cost profiles or the estimated battery SOC over the charge period based on the estimated charge profile.

Predicted cost profiles may be estimated based on previous values in a time window of equal duration. Predicted cost profiles may be estimated based on previous values sharing one or more of the following: same time of the day, same day of the week, same month, same event or national holiday, same predicted outdoor temperature, or any other event known to affect load on the electrical grid and/or electricity cost.

The fitness function F may for example be the sum of partial fitness functions F1,F2, each evaluating a fitness score relative to a single input independent from other inputs, as follows:

$$F = \sum_k Fk \quad (3)$$

Such a fitness function is very adaptable, as inputs and their associated fitness functions can easily be added or removed, and therefore the contribution of inputs to the fitness score can also be easily added or removed.

This facilitates modifications between instances of the algorithm, and even as the algorithm is running, saving computation time and/or memory, required for real-time update of the charge profile.

For example, in the case where a first input is the electricity cost profile c, the partial fitness function F1 may be defined as:

$$F1 = -\lambda 1 \sum_j U.I(j).c(j).\Delta t \quad (4)$$

where $\lambda 1$ is a predetermined constant, U is the battery voltage, and I is the intensity of the charge current; and wherein the notation X(j) represents the j-th element of a vector X.

Battery-related quantities, for example the battery voltage U, may be defined as constant based on known battery characteristics under a first approximation, or may be time-dependent, for example based on battery sensor data providing more accurate values.

In the case where a second input is the target SOC s*, the partial fitness function F2 may be defined as:

$$F2 = -\lambda 2 \left| s(N) - s^* \right|^b \quad (5)$$

where $\lambda 2$ is a predetermined constant.

The parameter "b" makes it possible to change the relative contribution of comparatively "small" and comparatively "big" deviations from the target SOC s*, the higher the parameter "b" the worse the score profiles having "big" deviations from the target SOC s* as compared to "small" deviations.

For example, in the case where b=0.5, F2 is proportional to the square root of |s-s*|. The square root function is a concave function that tends to "contract" intervals to intervals closer to 1, and therefore to reduce a contribution of the difference of SOC as compared to the identify function, e.g. when b=1. On the contrary, in the case where b=2, F2 is proportional to the square of |s(N)-s*|, wherein the square function is a convex function that tends to "expand" intervals to intervals further away from 1, and therefore to increase a contribution of the difference of SOC as compared to the identify function.

It is understood that parameters $(\lambda k)k$ may be defined so as to make the expression of the partial fitness functions F1,F2 of the fitness function F dimensionless. Their values can be modified so as to change the "weight" of each partial fitness function F1,F2 in the fitness function F, e.g. to modify relative importance of the inputs in the optimization of charging of the battery 10.

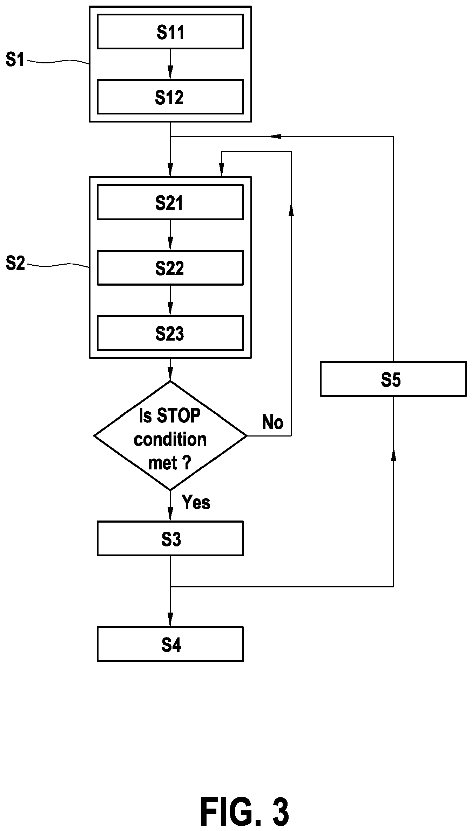

Fig. 3 is a general diagram of the method of charging, and Table 1 below is a more detailed diagram of the method of charging.

The order of the steps as identified below is meant to be illustrative rather than limitative, as some steps may be optional and/or within a different order. The current work population is only illustrative, and is provided as a working example to facilitate understanding of the method.

In particular, the order of the steps as identified below does not rule out that some steps may be performed in parallel, for example to improve computation speed and/or to reduce memory cost. For example, in the case of steady state selection which will be further discussed below, applying genetic operators and selection may be performed in parallel.

S1: Initialization

S11: Random population generation

The step S1 of initialization may comprise a step S11 of defining initial charge profiles.

Generating initial charge profiles may include generating a random population of charge profiles. Generating initial charge profiles may also include taking some or every charge profiles of previous instances of the method as initial charge profiles, as will be described later with respect to step S5.

In the present example, 300 charge profiles are generated with each element of the charge profiles taking random values between 0 and Imax, for example based on a uniform distribution.

These initial charge profiles provide a high genetic diversity, which increases the likelihood that the algorithm achieves optimum solutions. In particular, it is not necessary that these initial charge profiles approach an acceptable solution.

However, the initial population of charge profiles may be generated differently, for example in order to improve computation time.

For example, when the fitness function F includes a target SOC s*, the definition of the charge profiles may be based on a random variable having an expected value set as s*, for example normal distribution.

It is not necessary that the initial charge profiles take values between 0 and Imax. For example, the lower bracket can be reduced and/or the higher bracket can be increased. Indeed, at this stage, it is not required that the initial charge profiles be electrically feasible or safe, as such requirements may be taken into account in the definition of charge constraints, whereas broader values may increase converging speed to optimum solutions in the following steps of the method.

The lower bracket can be increased and/or the higher bracket can be reduced. For example, starting with charge currents lower than Imax may reduce battery heating and improve the battery lifespan, and may therefore more closely approach an optimum solution taking into account of such charge constraints.

S12: Selection

The step of initialization S1 may include a step S12 of selection. In addition or in replacement, the step of selection S12 may be applied at later stages of the method, for example in the following step of iteration S2.

The step of selection S12 aims to reduce the current work population by only selecting some profiles of the current work population based on a selection criterion.

Selection S12 may for example be based on the fitness score of a charge profile of the current work population.

Selection S12 may for example involve "relative selection", where profiles of the current work population are selected based on their fitness score relative to the fitness score of the other profiles of the current work population. For example, profiles may be selected based on whether they are among a predetermined number or a predetermined ratio of the best profiles of the current work population, based on whether they are among both such a predetermined number and such a predetermined ratio, or based on the least restrictive of the two criteria.

The predetermined ratio or predetermined number may be a decreasing function of the number of iteration.

Selection S12 may also involve "absolute selection", where profiles of the current work population are selected based on whether they outperform an objective fitness score. The objective fitness score may for example be a predetermined fitness score, or be an increasing function of the iteration number.

Selection may be made based on both relative selection and absolute selection simultaneously, e.g. a selected profile is a profile that meets selection criteria of both relative selection and absolute selection, or based on the least restrictive of the two criteria, e.g. a selected profile is a profile that meets the selection criterion of at least one of the relative selection and the absolute selection.

Relative selection makes it possible to ensure that a sufficiently genetically diverse population is kept, especially at early stages of the method where fitness scores are still low, and therefore to reduce the number of profiles while maintaining sufficiently high genetic diversity.

Absolute selection makes it possible to reduce the number of profiles, and to reduce genetic diversity and thereby variability as the solutions begin approaching an optimum solution, especially at later stages of the method where fitness scores are higher.

Selection based on both the absolute selection and relative selection make it possible to define a single selection criterion that is suitable throughout the iterations.

Alternately, selection may be based on stochastic universal sampling, wherein the profiles are ranked by increasing fitness, and selecting elements at evenly spaced ranks. This makes it possible for profiles with poor fitness scores to be chosen, therefore retaining some genetic diversity.

Alternately, selection may be based on steady state selection, wherein selection and generation of profiles are performed jointly.

In steady state selection, the population is divided in two sets, not necessarily of equal number of profiles: a set of parents for generation of new profiles using genetic operators and the rest of the population that will not take part generation of new profiles. The set of parents may be chosen to include the best profiles.

Every new child profile will replace a profile of the rest of the population, such that the population remains steady as generation of new children and selection are performed jointly.

S2: Iteration

The step of iteration S2 aims to provide charge profiles increasingly closer to an optimum charge profile.

The step of iteration includes one or more among the following steps of applying genetic operators S21, a step of selection S22 as defined with respect to the above step S12, and a step S23 of identification of best profiles and storage.

S21: Applying genetic operators

Applying genetic operators comprises applying one or more genetic operators, such as mutation or crossover, to the current work population.

Mutation may be determined by a first mutation rate r1 and a second mutation rate r2.

The first mutation rate r1 defines the ratio of profiles to be mutated among the current work population.

The second mutation rate r2 defines the ratio of elements to be mutated among the elements of a profile to be mutated.

An element may for example be mutated by replacing its value with a random value, for instance between 0 and Imax.

An element may for example be mutated by addition of a random noise.

A mutated profile ("child profile") may replace the original profile ("parent profile"). The child profile may also be included in the current work population in addition to the parent profile.

The likeliness that an individual profile be selected as a profile to be mutated may or may not be equal to the first mutation rate r1, which is the average likeliness that an individual profile be selected as a profile to be mutated over the current work population.

For example, mutation may be adaptive mutation, wherein the likeliness of mutation is a decreasing function of the fitness score. In other words, the greater the fitness score, the less likely the profile is to be mutated.

Crossover is the operation of swapping one or more sequences of elements between a pair of profiles ("parent profiles") to create a new pair of profiles ("children profiles").

The children profiles may replace the parent profiles. The children profiles may also be included in the current work population in addition to the parent profiles.

The number of crossover operations to perform may be predetermined, for example as a ratio (crossover rate) r3 of the number of profiles in the current work population, or as a predetermined number of operations.

The pairs of profiles subjected to the operation of crossover may be chosen randomly, wherein one profile may be involved in zero, one or more pairs.

The distance between profiles may be the mathematical distance, for example based on the Euclidean norm.

The pairs of profiles to subject to crossover may be chosen to have a comparatively high distance or a comparatively low distance.

Pairs of profiles having a high distance tend to increase the genetic diversity of the work population as compared to pair of profiles having a low distance. Pairs of profiles having a low distance tend to provide children profiles less diverging as compared to pair of profiles having a high distance.

The operations of steps S21 and S22 may be performed in any order.

For instance, the step S22 of selection may be performed prior to the step S21 of applying genetic operators, or may be applied between the operation of mutation and crossover in any order. Step S22 may be optional, for example step S22 may be optional in case where step S12 was previously performed in the same iteration.

More generally, a step of selection may be performed after some or every operation that leads to a bigger current work population.

S23: Best profile identification and storage

Step S23 involves identifying one or more of the best profiles of the current work population, and storing them. This ensures that despite further iterations defined below, the fitness score of the best charge profile of the current work population does not decrease.

Step S2 of iteration may then be repeated with the current work population until a STOP condition is met.

Fig. 5 shows an example of evolution of the best fitness score of the current work population of a generation over the number of generations (e.g. of iterations).

In the present example, the fitness function F is the sum of the partial fitness functions F1 and F2. The fitness score improves by contribution of partial fitness function F1 as the charge current is comparatively low when the electricity cost is comparatively high and as the charge current is comparably high when the electricity cost is comparatively low, and improves by contribution of partial fitness function F2 as the charge current is high enough throughout the charge period for the SOC s to approach the target SOC s*.

In the example of Fig. 5, the STOP condition was set based on a maximum number of iterations set at 100. The STOP condition may also be set based on a rate of improvement of the fitness score between successive iterations. In such a case, for instance, the example of Fig. 5 would have likely been stopped during the plateau of generations 15-50.

S3: Output

Once the method has broken from the iteration loop, the best charge profile is output by the genetic algorithm.

The step of output S3 puts an end to the genetic algorithm.

S4: Charging

The output charge profile is by construction the most suitable among the charge profiles for charging the vehicle according to the charge constraints.

The output charge profile may then be applied to the battery 10.

S5: Re-run

The genetic algorithm may be re-run, for example manually re-run by a user, re-run periodically or re-run upon update of a charge constraint.

The re-run may be made prior to charging of the vehicle, for example to allow a user to visualize and modify a charge profile according to a user's preference.

The re-run may be made as the charging is performed, for example to take into account updated quantities, including but not limited to correcting discrepancies such as between expected SOC and actual SOC upon charging, or to update predicted the electricity cost based on the actual electricity cost.

The re-run may involve modifying an input of the genetic algorithm, for example to add or remove an input, and adapting the fitness function accordingly.

The re-run may involve modifying the fitness function, for example by modifying relative weights of the inputs or by changing the expression of the partial fitness function of an input.

The re-run may involve modifying any one of the parameters of the genetic algorithm, comprising but not limited to mutation and crossover rates, maximum population size, selection parameters or stop condition.

The re-run may be partial, for instance by re-running the genetic algorithm starting back at step S2, as illustrated in Fig. 3, using the current work population as starting population. This may be advantageous for minor modifications of the fitness function, wherein the optimum profile is expected to be close to the profiles of the current work population.

A step of selection may be performed on the current work population prior to performing step S2.

The re-run may also be complete, for instance by re-running the genetic algorithm starting back at step S 1. This may be advantageous for major modifications of the fitness function, or in a situation where it is believed that the algorithm may not have output an optimum solution.

In case of re-run while the vehicle is charging, charging the battery 10 may be continued based on the new output charge profile, e.g. the output charge profile of the last instance of re-run.

The charge profile output for charging the vehicle may be the profile output at the end of an instance of the genetic algorithm. The charge profile for charging the vehicle may also be a linear combination of multiple charge profiles output at the end of several instances of the algorithm.

For instance, the charge profile may be the average of the charge profiles output taking account of different predicted cost profiles.

In the example of charging of a vehicle overnight (i.e. over a sufficient time), the end user is ensured to have their battery sufficiently charged, with the battery charging also being capable of taking account of further charge constraint detailed below.

| Step | Current work population |
|---|---|
| S11: Random population generation | 4000 |
| S12 : Selection | 2000 |
| S21 : Applying genetic operators | 2000 (800 parents + 1200 children) |
| S22 : Selection | 2000 |
| S23 : Best profile identification and storage | 2000 |
| S3 : Output | 2000 |
| S5 : Re-run | 2000 (including stored best elements) |

Table 1: One complete iteration of the method of charging a vehicle according to an embodiment. The right column shows the number of profiles in the current work population at the end of each step of the left column.

Performances of an example method according to the embodiments are shown in Figure 5 and 6A to 6D.

These examples are based on the above method wherein the fitness function is the sum of the fitness function is the sum of fitness function F1 of equation (4) and the fitness function F2 of equation (5), with the following parameters:

$\lambda1 = 1$

$\lambda2 = 10$

$b = 1$

starting SOC = 10%

target SOC s* = 70%

Battery Capacity = 25Ah

Battery voltage = 400V

Imax = 5A

Number of generations = 100

Maximum population size throughout the algorithm = 2000

Relative selection at step S12 = 50% of best elements

Number of parents mating at step S21 = 800 of the best elements

STOP condition based on maximum number of iterations equal to 100

Total number of timesteps per hour N/T = 20

Duration T = 10 hours

Uniform distribution for generation of random initial profiles, taking values in the range [0;4]

Selection method : Steady state selection

Crossover type: single point

Mutation type: Adaptive

First mutation rate r1 = 20%

Second mutation rate r2 = 10%

Crossover rate r3 = 50%

Location of cost of electricity: Based on the following price of electricity in Belgium through a whole day, which is summarized in Table 2 below.

Table 2 : Hourly prices of electricity at different hours in Belgium through a whole day.

| Time (hour) | Hourly price (€/kWh/hour) | Time (hour) | Hourly price (€/kWh/hour) |
|---|---|---|---|
| 1 | 0.29451 | 13 | 0.40491 |

(continued)

| Time (hour) | Hourly price (€/kWh/hour) | Time (hour) | Hourly price (€/kWh/hour) |
|---|---|---|---|
| 2 | 0.27553 | 14 | 0.39296 |
| 3 | 0.26707 | 15 | 0.41346 |
| 4 | 0.24994 | 16 | 0.42991 |
| 5 | 0.31443 | 17 | 0.43073 |
| 6 | 0.2739 | 18 | 0.44498 |
| 7 | 0.34463 | 19 | 0.47435 |
| 8 | 0.41361 | 20 | 0.47387 |
| 9 | 0.4681 | 21 | 0.395 |
| 10 | 0.4369 | 22 | 0.3331 |
| 11 | 0.42686 | 23 | 0.32456 |
| 12 | 0.44308 | 24 | 0.30346 |

Figure 5 is a graph showing an example of a method of charging a battery as compared with other "Dummy control" (solid line with circles), "Constant control" (short dashed line) and a method based on reinforcement learning (long dashed line), these methods taking the same values for shared parameters, when appropriate.

In the example of Figure 5, the charge profile according to the genetic algorithm of the present method has a total charging cost of 1.5846 euros, achieving a 25% cost reduction as compared to "Dummy control" and to "Constant control", and a 1.73% cost reduction as compared to charging based on reinforcement learning which has a total charging cost of 1.6125 euros.

Figures 6A to 6D summarize performances of the present method as compared with "Dummy control" and "Constant control", based on 20000 instances of the algorithm that has been run for 20000 different cost profiles, including real and/or predicted.

Figure 6A is a histogram showing the change in cost for the method of the present application as compared with "Dummy control".

The histogram can be fitted by a Gaussian function of mean value equal to -22.89 and standard deviation equal to 12.44.

The present method almost consistently outperforms "Dummy control" from the standpoint of cost reduction.

Figure 6B shows the cumulative distribution of cost reduction for the 20000 instances of the method as seen on Figure 6A, as compared with 20000 instances of reinforcement learning methods based on common set of parameters when applicable, including the same 20000 different cost profiles.

As can be better seen on Figure 6B, the method of the present application outperforms "Dummy control" for more than 97 % of the cost profiles, and underperforms the remaining 3% of profiles. In contrast, the method based on reinforcement learning only outperforms in about 85% of the cost profiles.

This estimation was made based on a low number of iterations to reduce computing costs of this widespread assessment, and it is expected that further iterations for a given profile can better improve cost reductions.

As seen in Figure 6B, the cumulative distribution of the genetic algorithm is consistently lower than the cumulative distribution of the reinforcement learning, by about 10% of greater cost reduction.

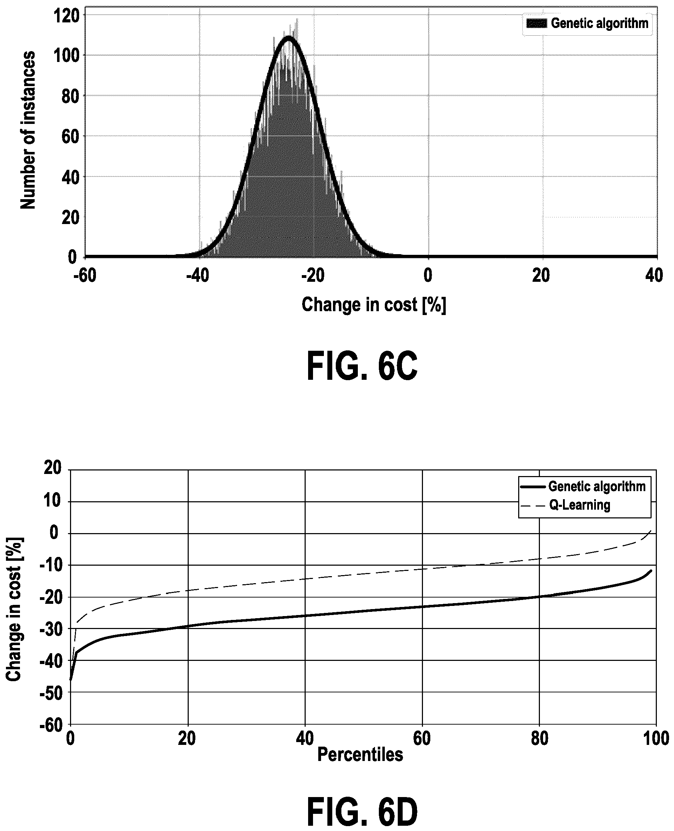

Figure 6C is a histogram showing the change in cost for the method of the present application as compared with "Constant control", based on the same conditions as the instances of Figure 6A.

The histogram can be fitted by a Gaussian function of mean value equal to -24.42 and standard deviation equal to 5.53.

The present method consistently outperforms "Constant control" from the standpoint of cost reduction, with the exception of a few outlier profiles.

Figure 6D shows the cumulative distribution of cost reduction for the same 20000 instances of the method, as compared with 20000 instances of reinforcement learning methods based on common set of parameters when applicable, including the same 20000 different cost profiles.

As seen in Figure 6D, the cumulative distribution of the genetic algorithm is consistently lower than the cumulative distribution of the reinforcement learning, by about 10% of greater cost reduction.

Throughout the description, including the claims, the term "comprising a" should be understood as being synonymous with "comprising at least one" unless otherwise stated. In addition, any range set forth in the description, including the claims should be understood as including its end value(s) unless otherwise stated. Conversely, the use of the plural form may also include the singular form unless otherwise stated. Specific values for described elements should be understood to be within accepted manufacturing or industry tolerances known to one of skill in the art, and any use of the terms "substantially" and/or "approximately" and/or "generally" should be understood to mean falling within such accepted tolerances.

Although the present disclosure herein has been described with reference to particular embodiments, it is to be understood that these embodiments are merely illustrative of the principles and applications of the present disclosure.

It is intended that the specification and examples be considered as exemplary only, with a true scope of the disclosure being indicated by the following claims.

## Claims

1. A computer-implemented method for optimization of charging a battery (10) of a vehicle (V), the method comprising applying a genetic algorithm, wherein:

   the genetic algorithm takes, as an input, a charge period (T) available for charging the battery of the vehicle, and
   the genetic algorithm outputs at least one charge profile over the charge period (T).

2. The method of claim 1, wherein the genetic algorithm takes, as an input, a target state of charge (s*) for the battery (10).

3. The method of claim 1 or 2, wherein the genetic algorithm takes, as an input, an electricity cost profile, optionally wherein the electricity cost profile includes a predicted electricity cost profile.

4. The method of any of claims 1 to 3, wherein the genetic algorithm takes, as an input, at least one of battery specifications, a battery durability and a battery charging efficiency.

5. The method of any of claims 1 to 4, wherein the genetic algorithm comprises the steps of:

   defining at least one initial charge profile;
   evaluating a fitness score for the at least one initial charge profile based on a fitness function, wherein the fitness function is based on at least one charge constraint, the at least one charge constraint being optionally based on the at least one input;
   selecting at least one parent charge profile from the at least one initial charge profile based on their respective fitness score;
   generating at least one child charge profile by applying at least one genetic operator to the at least one parent charge profile; and
   iterating the steps of evaluating, selecting and generating, with the at least one initial charge profile including the at least one child charge profile, until a stop condition is met;
   the method further comprising outputting, when the stop condition is met, at least one of the remaining child charge profiles having the best fitness score.

6. The method of claim 5, wherein the fitness function is a polynomial function of the at least one charge constraint.

7. The method of claim 5 or 6, wherein the stop condition includes reaching a threshold for at least one of a target fitness score, a number of iteration, a rate of improvement of the fitness score between two iterations, computing time or memory load.

8. The method of any of claims 5 to 7, wherein the at least one initial charge profile is a random initial charge profile.

9. The method of any of claims 5 to 8, wherein the at least one genetic operator includes mutation and/or crossover.

10. The method of claim 9, wherein the step of crossover involves one-point crossover.

11. The method of any of claim 5 to 10, wherein the step of selection comprises selecting a predetermined number of elements and/or selection is based on steady state selection.

12. The method of any of claims 5 to 11, wherein the at least one genetic operator includes mutation and crossover, the method further comprising a second step of selecting at least one parent charge profile between mutation and crossover.

13. A method of charging a battery (10) of a vehicle (V) using the computer-implemented method according to any of the previous claims, comprising applying the output charge profile to the battery (10) of the vehicle (V).

14. The method of charging a battery of a vehicle of claim 13 in combination with claim 5, comprising, during the charge of the battery (10) of the vehicle (V):

> modifying the fitness function and/or the at least one input of the genetic algorithm;
> running a new instance of the genetic algorithm based on the modified fitness function and/or the at least one modified input of the genetic algorithm; and
> continuing the charge of the battery of the vehicle based on the output child charge profile of said new instance having the best fitness score.

15. A computer-readable program comprising instructions which, when the program is executed by a computer, cause the computer to carry out the steps of the method of any of the previous claims.

**Amended claims in accordance with Rule 137(2) EPC.**

1. A computer-implemented method for optimization of charging a battery (10) of a vehicle (V) and of charging a battery, the method comprising applying a genetic algorithm, wherein:

> the genetic algorithm takes, as an input, a charge period (T) available for charging the battery of the vehicle,
> the genetic algorithm outputs at least one charge profile over the charge period (T), and
> the method comprising applying the output charge profile to the battery (10) of the vehicle (V) **characterized in that**
> the genetic algorithm takes, as an input, an electricity cost profile, optionally wherein the electricity cost profile includes a predicted electricity cost profile.

2. The method of claim 1, wherein the genetic algorithm takes, as an input, a target state of charge ($s^*$) for the battery (10).

3. The method of claim 1 or 2, wherein the genetic algorithm takes, as an input, at least one of battery specifications, a battery durability and a battery charging efficiency.

4. The method of any of claims 1 to 3, wherein the genetic algorithm comprises the steps of:

> defining at least one initial charge profile;
> evaluating a fitness score for the at least one initial charge profile based on a fitness function, wherein the fitness function is based on at least one charge constraint, the at least one charge constraint being optionally based on the at least one input;
> selecting at least one parent charge profile from the at least one initial charge profile based on their respective fitness score;
> generating at least one child charge profile by applying at least one genetic operator to the at least one parent charge profile; and
> iterating the steps of evaluating, selecting and generating, with the at least one initial charge profile including the at least one child charge profile, until a stop condition is met;
> the method further comprising outputting, when the stop condition is met, at least one of the remaining child charge profiles having the best fitness score.

5. The method of claim 4, wherein the fitness function is a polynomial function of the at least one charge constraint.

6. The method of claim 4 or 5, wherein the stop condition includes reaching a threshold for at least one of a target fitness score, a number of iteration, a rate of improvement of the fitness score between two iterations, computing time or memory load.

7. The method of any of claims 4 to 6, wherein the at least one initial charge profile is a random initial charge profile.

8. The method of any of claims 4 to 7, wherein the at least one genetic operator includes mutation and/or crossover.

9. The method of claim 8, wherein the step of crossover involves one-point crossover.

10. The method of any of claim 4 to 9, wherein the step of selection comprises selecting a predetermined number of elements and/or selection is based on steady state selection.

11. The method of any of claims 4 to 10, wherein the at least one genetic operator includes mutation and crossover, the method further comprising a second step of selecting at least one parent charge profile between mutation and crossover.

12. The method of claim 4, comprising, during the charge of the battery (10) of the vehicle (V):

   modifying the fitness function and/or the at least one input of the genetic algorithm;
   running a new instance of the genetic algorithm based on the modified fitness function and/or the at least one modified input of the genetic algorithm; and
   continuing the charge of the battery of the vehicle based on the output child charge profile of said new instance having the best fitness score.

13. A computer-readable program comprising instructions which, when the program is executed by a computer, cause the computer to carry out the steps of the method of any of the previous claims.

V

10

20

L

S

30

40

50

# FIG. 1

Charge period

Target SOC

Electricity cost profile

Battery specifications

Battery durability

Battery charging efficiency

Genetic algorithm

Output charge profile

# FIG. 2

S1

S11

S12

S2

S21

S22

S23

Is STOP
condition
met ?

No

S5

Yes

S3

S4

# FIG. 3

**FIG. 4**

Charging process in different methods

FIG. 5

FIG. 6A

FIG. 6B

FIG. 6C

FIG. 6D

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/145531 A1 (JUNG DAERYONG [KR] ET AL) 24 May 2018 (2018-05-24) <br> * paragraph [0003] – paragraph [0004] * <br> * paragraph [0006] * <br> * paragraph [0011] * <br> * paragraph [0013] – paragraph [0014] * <br> * paragraph [0071] – paragraph [0073] * <br> * paragraph [0078] * <br> * paragraph [0083] * <br> * claims 8,19 * | 1-15 | INV. <br> B60L53/64 <br> G06N3/126 |
| X | EP 3 442 092 A1 (BOSCH GMBH ROBERT [DE]) 13 February 2019 (2019-02-13) <br> * paragraph [0023] – paragraph [0027] * <br> * paragraph [0040] * | 1-15 | |
| X | GARCÍA-ÁLVAREZ JORGE JGARCIA-ALVAREZ@OUTLOOK COM ET AL: "A Genetic Algorithm for Scheduling Electric Vehicle Charging", MOBISYS '15: PROCEEDINGS OF THE 13TH ANNUAL INTERNATIONAL CONFERENCE ON MOBILE SYSTEMS, APPLICATIONS, AND SERVICES, ACM, 2 PENN PLAZA, SUITE 701 NEW YORK NY 10121-0701 USA, 11 July 2015 (2015-07-11), pages 393-400, XP058510549, DOI: 10.1145/2739480.2754695 ISBN: 978-1-4503-3358-0 <br> * abstract * <br> * Sections 1 to 5 * | 1-15 | TECHNICAL FIELDS SEARCHED (IPC) <br><br> B60L <br> G06N |

-/--

The present search report has been drawn up for all claims

| Place of search | Date of completion of the search | Examiner |
|---|---|---|
| Munich | 12 July 2023 | Aguilar, José María |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 23 16 0846

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | YANG JUNJIE ET AL: "Electricity scheduling strategy for home energy management system with renewable energy and battery storage: a case study", IET RENEWABLE POWER GENERATION, THE INSTITUTION OF ENGINEERING AND TECHNOLOGY, MICHAEL FARADAY HOUSE, SIX HILLS WAY, STEVENAGE, HERTS. SG1 2AY, UK, vol. 12, no. 6, 30 April 2018 (2018-04-30) , pages 639-648, XP006066753, ISSN: 1752-1416, DOI: 10.1049/IET-RPG.2017.0330 * abstract * * sections 1 to 3 * ----- | 1-15 | |
| A | CN 111 126 765 A (GUANGDONG POWER GRID CO ET AL.) 8 May 2020 (2020-05-08) * the whole document * ----- | 1-15 | |

TECHNICAL FIELDS SEARCHED (IPC)

The present search report has been drawn up for all claims

| Place of search | Date of completion of the search | Examiner |
|---|---|---|
| Munich | 12 July 2023 | Aguilar, José María |

EPO FORM 1503 03.82 (P04C01)

page 2 of 2

**EP 4 427 972 A1**

## ANNEX TO THE EUROPEAN SEARCH REPORT
## ON EUROPEAN PATENT APPLICATION NO.

EP 23 16 0846

This annex lists the patent family members relating to the patent documents cited in the above-mentioned European search report.
The members are as contained in the European Patent Office EDP file on
The European Patent Office is in no way liable for these particulars which are merely given for the purpose of information.

12-07-2023

| Patent document cited in search report | | Publication date | Patent family member(s) | | Publication date |
|---|---|---|---|---|---|
| US 2018145531 | A1 | 24-05-2018 | CN | 108075200 A | 25-05-2018 |
| | | | EP | 3331124 A1 | 06-06-2018 |
| | | | JP | 7015678 B2 | 03-02-2022 |
| | | | JP | 2018082618 A | 24-05-2018 |
| | | | KR | 20180056238 A | 28-05-2018 |
| | | | US | 2018145531 A1 | 24-05-2018 |
| EP 3442092 | A1 | 13-02-2019 | CN | 109383324 A | 26-02-2019 |
| | | | EP | 3442092 A1 | 13-02-2019 |
| | | | TW | 201911701 A | 16-03-2019 |
| CN 111126765 | A | 08-05-2020 | NONE | | |